# EUROPÄISCHE PATENTSCHRIFT

(11) **EP 1 110 296 B1**
(45) Veröffentlichungstag und Bekanntmachung des Hinweises auf die Patenterteilung: **27.09.2006**
(21) Anmeldenummer: 99944462.3
(22) Anmeldetag: 20.08.1999
(51) Int. Cl.: H02J 13/00, G01D 4/00

(54) **SYSTEM ZUR KONTROLLE DES VERBRAUCHS EINES INSBESONDERE LEITUNGSGEBUNDENEN MEDIUMS**
SYSTEM FOR CONTROLLING CONSUMPTION OF A MEDIUM, ESPECIALLY A MAINS-CONNECTED MEDIUM
SYSTEME POUR CONTROLER LA CONSOMMATION DE FLUIDE, NOTAMMENT DE FLUIDE GUIDE

(30) Priorität: 27.08.1998 DE 19839116
(43) Veröffentlichungstag der Anmeldung: 27.06.2001
(73) Patentinhaber: Ziegler, Horst Prof. Dr., D-33100 Paderborn (DE)
(72) Erfinder: ZIEGLER, Horst, D-33100 Paderborn (DE); ZIEGLER, Martin, A., D-33100 Paderborn (DE); ZIEGLER, Ulrike, C., D-71065 Sindelfingen (DE); ZIEGLER, Tobias, I., D-33100 Paderborn (DE)
(74) Vertreter: Tiesmeyer, Johannes
(86) Internationale Anmeldenummer: PCT/EP1999/006132
(87) Internationale Veröffentlichungsnummer: WO 2000/013291

(56) Entgegenhaltungen:
- EP-A- 0 762 350
- DE-A- 19 516 555
- DE-A- 19 600 188
- GB-A- 2 144 566
- GB-A- 2 303 023
- GB-A- 2 313 462
- US-A- 5 640 153

## Beschreibung

Die Erfindung geht aus von einem System zur Kontrolle des Verbrauchs bzw. der Nutzung eines Mediums gemäß dem Oberbegriff des Anspruchs 1.

Die Erfindung kann dem Bereich der Versorgungstechnik im weiteren Sinne zugeordnet werden. Es ist in der konventionellen Versorgungstechnik üblich, den Medienverbrauch, d.h. die verbrauchten Mengen leitungsgebundener Medien, wie Wasser, Gas, Wärme oder elektrische Energie, mit Verbrauchszählern zu messen und den gemessenen Verbrauch dem Verursacher bzw. dem Verbrauchsstelleninhaber bzw. Nutzungsstelleninhaber in Rechnung zu stellen. Verbrauchsstelle bzw. Nutzungsstelle in diesem Sinne kann eine Wohnung, ein Haus, eine Fabrikanlage usw. sein, also eine mit dem betreffenden Medium zu versorgende Einheit, für die der Medienverbrauch jeweils abzurechnen bzw. zu kontrollieren ist.

Zur Verbrauchserfassung werden die vor Ort an den Verbrauchsstellen installierten Verbrauchszähler üblicherweise in regelmäßigen Zeitabständen von Ablesern, also hierzu ausgebildeten Personen, kontrolliert und abgelesen. Die abgelesenen Verbrauchswerte werden dann in ein Abrechnungssystem des betreffenden Versorgungsunternehmens zum Zwecke der Erstellung der Rechnung für den Kunden eingegeben.

Eine erste Verbesserungsmöglichkeit ist die Zählerfernablesung, bei der der Zählerstand eines (elektronischen) Zählers über geeignete Kommunikationssysteme zur Abrechnungsstelle des Versorgungsunternehmens übertragen wird, so daß die Verbrauchsstelle für den Ablesevorgang nicht mehr aufgesucht werden muß und in diesem Sinne ein Betreten der Wohnungen durch Ableser nicht mehr erforderlich ist. Hierdurch kann der Personalaufwand für die Verbrauchsdatenerfassung erheblich verringert werden. Ferner lassen sich Ablese- und Eingabefehler drastisch reduzieren.

Besonders im Wohnungs-Altbestand bereitet aber die Installation von Kommunikationsleitungen, Bus-Systemen etc. erhebliche Kosten. Ferner sind die Installationsarbeiten störend für die Wohnungsinhaber. Die Fernübertragung der Verbrauchsdaten zur Abrechnungsstelle über Modem und Telefon ist wegen der vergleichsweise hohen Telefon-Grundgebühren unwirtschaftlich, insbesondere bei nur monatlicher Zählerablesung und erst recht bei nur jährlicher Zählerablesung.

Auch moderne Funktelefonsysteme würden neben den beträchtlichen Gerätekosten sehr hohe laufende Grundgebühren erfordern und daher unwirtschaftlich für die Übertragung der Verbrauchsdaten zur Abrechnungsstelle sein.

Schwierig bei dieser Art der Verbrauchserfassung und Abrechnung ist auch der organisatorische Aufwand für die Rechnungserstellung und die Zahlungsüberwachung.

In einigen Ländern wird das sog. Prepayment-Modell favorisiert, bei dem das betreffende Medium gegen Vorauszahlung bereitgestellt wird. Der Verbrauchszähler wird dazu im einfachsten Fall manipulationssicher mit einer Abrechnungs- und Kontrolleinheit mit Münzeingabe ausgestattet, wobei ein Absperrelement (Absperrventil oder Stromschalter) jeweils eine dem Wert der eingegebenen Münzen entsprechende Verbrauchsmenge zum Verbrauch freigibt. Modernere Lösungen verwenden zur Werteingabe Karten statt Münzen (ähnlich den weit verbreiteten Telefonkarten). Damit lassen sich alternativ zu finanziellen Wertzuweisungen Verbrauchsmengenzuweisungen, etwa in m³, kWh usw. machen, wobei sich die Verbrauchsmengenzuweisungen leichter mit der Verbrauchsanzeige üblicher Verbrauchszähler in Beziehung setzen läßt. Nachteile einer solchen Karten-Lösung sind die Kosten der Karten, die Kosten für die automatischen Kartenleser und vor allem Handhabungs- und Bedienungsprobleme. Aus Sicherheitsgründen kommen nur die teuren Chipkarten und nicht die einfachen Magnetkarten in Frage. Es müssen normalerweise Spezialkarten eingesetzt werden, die für jeden Versorger verschieden codiert werden müssen, so daß die Nutzer bei mehreren getrennten Versorgern für die einzelnen Medien auch mehrere verschieden codierte Karten kaufen oder aufladen lassen müßten. Es ist darüber hinaus ein relativ großer Aufwand zu treiben, um die vorstehend genannten Prepayment-Systeme einigermaßen manipulationssicher betreiben zu können.

In der GB 2 313 462 A sind verschiedene Varianten eines Verbrauchskontrollsystems zur Kontrolle des Verbrauchs von Gas und Elektrizität an betreffenden Verbrauchsstellen erläutert. Gemäß einer Variante ist ein Elektrizitätszähler mit einem steuerbaren Unterbrechungsschalter ausgestattet, der zur Sperrung der Elektrizitätsversorgung geöffnet werden kann, wenn der Elektrizitätsverbrauch oder Gasverbrauch eine jeweilige zugewiesene Verbrauchsmenge überschreitet. Eine mit dem Elektrizitätszähler verbundene Prepayment-Einheit umfasst einen Wertkartenleser, der von einer Wertkarte Verbrauchsmengenzuweisungsdaten lesen und somit Verbrauchsmengen abbuchen kann. Die Prepayment-Einheit umfasst eine Steuereinrichtung, welche die von der Karte abgebuchten Verbrauchszuweisungsmengen für Gas bzw. Elektrizität mit dem tatsächlichen Gasverbrauch bzw. Elektrizitätsverbrauch vergleicht. Überschreitet der tatsächliche Verbrauch die zugewiesene Verbrauchsmenge, so wird die Elektrizitätsversorgung durch Öffnung des Unterbrechungsschalters unterbrochen. Zur Erfassung des Gasverbrauchs ist ein Gaszähler vorgesehen, welcher einen Sender aufweist, der Gasverbrauchsdaten an einen Empfänger der mit dem Elektrizitätszähler verbundenen Prepayment-Einheit senden kann.

Gemäß einer anderen Variante des bekannten Verbrauchskontrollsystems für Gas und Elektrizität ist die Prepayment-Einheit von dem Elektrizitätszähler getrennt an der Verbrauchsstelle angeordnet. Die Prepayment-Einheit umfasst einen Empfänger zum Empfang der Verbrauchsdaten von einem Gaszähler und von einem Elektrizitätszähler sowie einen Sender, mit dem sie Steuersignale zur Aktivierung des Unterbrecherschalters des Elektrizitätszählers aussenden kann, um die Elektrizitätsversorgung zu unterbrechen, wenn die von einer Prepayment-Wertkarte abgebuchte zugewiesene Verbrauchsmenge durch den tatsächlichen Verbrauch von Gas bzw. Elektrizität erschöpft wurde.

Gemäß einer weiteren Variante des bekannten Verbrauchskontrollsystems mit einer Prepayment-Einheit, die vom Gaszähler und vom Elektrizitätszähler gesondert an der Verbrauchsstelle vorgesehen ist, weisen sowohl der Gaszähler als auch der Elektrizitätszähler Sender und Empfänger für bidirektionale Kommunikation mit der Prepayment-Einheit auf.

In der GB 2 313 462 A ist auch ein Kommunikationssystem angesprochen, welches bidirektionalen Datenaustausch zwischen Verbrauchsstelle und Versorgungsunternehmen ermöglicht.

In der DE 295 15 869 U1 wird eine Vorrichtung zur gesteuerten bargeldlosen Abgabe von elektrischer Energie, Gas, Wasser oder ähnlichen Medien beschrieben, bei der der Kunde anstelle einer Chipkarte eine kodierte Zeichenfolge in das Steuergerät eingeben kann, die einen eingezahlten Geldbetrag repräsentiert und damit eine bestimmte Strom- oder Gasabgabe ermöglicht.

Diese Vorrichtung umfasst ein Messwerk, einen Leistungsschalter, eine Steuer- und Auswerteschaltung, eine Dateneingabeeinrichtung, zum Beispiel mit einer Tastatur ausgestattet, und ein Anzeigemodul.

Der Kunde erhält bei seinem Netzbetreiber, Elektrizitätsversorgungsunternehmen oder Stadtwerk gegen Bezahlung eine Zeichenfolge mit bestimmten kodierten Daten, beispielsweise auf einem Quittungsbeleg. Diese Zeichenfolge wird dann in die Dateneingabeeinrichtung eingegeben und nach einer Plausibilitätsprüfung in die Steuer- und Auswerteschaltung übernommen. Nach einer weiteren Überprüfung der Zeichenfolge auf eine betreibereigene Systematik wird der Leistungsschalter angesteuert, der die elektrische Energie, das Gas, Wasser oder ähnliches Medium freischaltet.

Gemäß einer weiteren Variante der in DE 295 15 869 U1 beschriebenen Vorrichtung ist eine Schnittstelle mit einem Empfänger am Gehäuse der Verbrauchskontrolleinrichtung vorgesehen, mit der ebenfalls Daten als verschlüsselte Zeichenfolgen eingegeben werden können. Dies kann auf optischem Wege, per Funk oder Infrarot erfolgen.

Die Schnittstelle kann für bidirektionale Kommunikation zwischen Verbrauchsstelle und Versorgungsunternehmen auch als Sender ausgebildet sein oder auch optisch oder als Steckkontakt ausgeführt sein, um befugtem Wartungspersonal das Auslesen von Daten über Nutzungsdauer, Nutzungszeit und dergleichen zu ermöglichen.

Der vorliegenden Erfindung liegt die Aufgabe zugrunde, ein komfortables und zuverlässig funktionierendes Verbrauchskontrollsystem bzw. Nutzungskontrollsystem anzugeben, das mit vergleichsweise geringem Aufwand betreibbar ist.

Zur Lösung dieser Aufgabe wird gemäß der Erfindung vorgeschlagen:
ein System zur Kontrolle des Verbrauchs bzw. der Nutzung eines Mediums, wie z.B. elektrischer Strom, Gas, Wasser, Wärme oder dgl., an einzelnen Verbrauchsstellen, wobei jeder Verbrauchsstelle eine jeweilige Verbrauchsmenge des Mediums, insbesondere gegen Vorauszahlung oder ggf. auf Kredit zugewiesen werden kann, die vom Medienversorger für die betreffende Verbrauchsstelle bereitzustellen ist, wobei jede Verbrauchsstelle mit einer Verbrauchskontrolleinrichtung ausgestattet ist und jede Verbrauchskontrolleinrichtung folgende Elemente umfaßt:
a) eine Verbrauchsmeßeinrichtung zur Erfassung des tatsächlichen Medienverbrauchs an der betreffenden Verbrauchsstelle,
b) eine steuerbare Sperreinrichtung, mittels welcher die Medienversorgung in bezug auf die betreffende Verbrauchsstelle unterbrochen werden kann, falls die zugewiesene Verbrauchsmenge durch den tatsächlichen Medienverbrauch erschöpft wird, und
c) eine die Sperreinrichtung steuernde Steuereinrichtung, die den mittels der Verbrauchsmengenmeßeinrichtung erfaßten tatsächlichen Medienverbrauch mit der jeweiligen zugewiesenen Verbrauchsmenge vergleicht und die die Sperreinrichtung zum Sperren der Medienversorgung der Verbrauchsstelle aktiviert, falls die zugewiesene Verbrauchsmenge durch den tatsächlichen Medienverbrauch erschöpft wird,
d) einen als Teil der Steuereinrichtung ausgebildeten Funkempfänger, der zum Empfang von Informationssignalen von einer Datensendezentrale bestimmt und geeignet sind, die Informationen über jeweils zugewiesene Verbrauchsmengen enthalten, und Bestandteil eines unidirektionalen Funk-Datenkommunikationssystems ist, das Datenübertragung in Richtung von der Datensendezentrale zu den Funkempfängern vorsieht, wobei jeder Empfänger von der Datensendezentrale aus mit einem jeweiligen Informationssignal eindeutig adressierbar ist, um Verbrauchsmengenzuweisungsdaten individuell in Zuordnung zur jeweiligen Verbrauchsstelle übertragen zu können.

Die Erfindung ist dadurch gekennzeichnet, dass jeder Empfänger dabei von seiner Steuereinrichtung nur zu bestimmten, dem jeweiligen Empfänger zugeordneten Zeitpunkten, insbesondere periodisch, empfangsbereit geschaltet wird und die Datensendezentrale nur zu den bestimmten Zeitpunkten mit dem betreffenden Empfänger kommuniziert.

Das System nach der Erfindung kann als Prepayment-System betrieben werden, bei dem die Verbrauchsmengenzuweisung pro Verbrauchsstelle und somit die Verbrauchsmengenkontrolle per Informationssignal erfolgt. Bei dem System nach der Erfindung reicht unidirektionale Datenübertragung zu den Verbrauchsstellenempfängern aus, so daß vor Ort an den Verbrauchsstellen keine Sendeeinrichtungen erforderlich sind.

Gemäß der Erfindung soll die unidirektionale Datenübertragung per Funk stattfinden. Der Empfänger ist in diesem Fall ein Funkempfänger, der das Informationssignal als Funksignal von der Datensendezentrale bzw. von einem mit der Datensendezentrale kommunizierenden Sender empfängt. Die Installation insbesondere batteriebetriebener Funkempfänger vor Ort ist mit geringstem Aufwand möglich und verursacht geringere Kosten als die Installation leitungsgebundener Datenempfangsgeräte.

Denkbar im Rahmen der Erfindung sind auch Mischformen der drahtlosen und drahtgebundenen unidirektionalen Datenübertragung von einer Datensendezentrale zu den betreffenden Verbrauchsstellen, so daß z.B. ein Teil der Übertragungsstrecke drahtlos und ein anderer Teil der Übertragungsstelle drahtgebunden sein kann, wobei ggf. Zwischenempfänger und Zwischensender erforderlich sind.

Außerdem soll die an der Verbrauchsstelle installierte Steuereinrichtung möglichst wenig Strom verbrauchen bzw. die Batterielebensdauer der Verbrauchsmesseinrichtung möglichst wenig herabsetzen. Daher ist bei der vorliegenden Erfindung vorgesehen, dass die Funkempfänger nicht im Dauerbetrieb betrieben werden, sondern nur zeitweise eingeschaltet werden, zum Beispiel eine Minute je Stunde oder eine Sekunde je Minute usw. Werden diese periodischen Einschaltpunkte nach bestimmten Regeln unter Einbeziehung der Sendeorganisation der Datensendezentrale gewählt, so kann ein entsprechend abgestimmter Sendebetrieb realisiert werden, bei dem eine betreffende Verbrauchsstelle vom Sender jeweils nur dann adressiert wird, wenn sie empfangsbereit ist.

Der Betrieb des Prepayment-Systems im weiteren Sinne kann beispielsweise so organisiert sein, daß bei dem Versorgungsunternehmen, welches das betreffende Medium bereitstellt, Konten für die in das System einbezogenen Verbrauchsstellen geführt werden. Die Konteninhaber, nämlich die die Verbrauchsstellen nutzenden Kunden des Versorgungsunternehmens, können an ihrem jeweiligen Medienbedarf ausgerichtete Vorauszahlungen auf ihre Konten, beispielsweise monatliche Abschlagszahlungen, leisten. Entsprechend der Vorauszahlung für den Medienverbrauch an einer betreffenden Verbrauchsstelle ist eine bestimmte Menge des Mediums an der Verbrauchsstelle bereitzustellen.

Wird der Kontostand für die betrachtete Verbrauchsstelle durch Einzahlung aktualisiert, also erhöht, so kann daraufhin eine entsprechende Wertübertragung (Übertragung neuer Verbrauchsmengenzuweisungsdaten) vorzugsweise per Funk von der Datensendezentrale des Versorgungsunternehmens zur Steuereinrichtung der Verbrauchsstelle erfolgen. Das Funksignal (Informationssignal) enthält wenigstens die eindeutige Adresse der Verbrauchsstelle und die neue Wertinformation, die der betreffenden Steuereinrichtung direkt oder indirekt die zum Verbrauch an der Verbrauchsstelle bereitzustellende Verbrauchsmenge indiziert. Die Wertinformation kann ein dem aktuellen Vorauszahlungsbetrag entsprechender Inkrementalwert sein, der von der jeweils adressierten Steuereinrichtung vor Ort einem etwaig noch vorhandenen Verbrauchsmengenzuweisurigsguthaben hinzuaddiert wird, um einen neuen Vergleichswert für den Vergleich mit dem tatsächlichen Verbrauch zu berechnen. Bevorzugt wird jedoch nicht die Übertragung der jeweiligen inkrementalen Verbrauchsmengenzuweisungen, sondern die Übertragung von Absolutwerten, die von der Steuereinrichtung unmittelbar oder ggf. nach Multiplikation mit einem Umrechnungsfaktor für den Verbrauchsmengenvergleich herangezogen wird. Vorzugsweise handelt es sich bei diesem Absolutwert um einen Wert, der in bezug auf den Verbrauchszähler der betreffenden Verbrauchsstelle den absoluten künftigen Zählerstandswert repräsentiert, bei dessen Erreichen die aktuell vorausbezahlte Verbrauchsmenge erschöpft ist. Eine solche Übertragung und Verarbeitung der absoluten Zählerstandsdaten anstelle von Verbrauchsmengenzuweisungsinkrementen hat den Vorteil, daß aus Sicherheitsgründen ohne Probleme Mehrfachübertragung der betreffenden Wertbotschaft von der Sendestation zu der betreffenden Verbrauchsstelle erfolgen kann. Würde man nur die Verbrauchsmengenzuweisungsinkremente übertragen und in den betreffenden Steuereinrichtungen jeweils aufaddieren, so wäre dafür Sorge zu tragen, daß bei Mehrfachübertragung keine Duplizierung bzw. Vervielfältigung der zugewiesenen Verbrauchsmenge vor Ort an der Verbrauchsstelle erfolgt. Bei dem bevorzugten Betrieb des Systems nach der Erfindung mit Übertragung der Absolut-Zählerstandsdaten als Verbrauchsmengenzuweisungsdaten erfolgt in der Steuereinrichtung vor Ort keine Summation der Verbrauchsmengenzuweisungsdaten, sondern eine Übernahme der aktuell übertragenen Daten für den Vergleich mit dem tatsächlichen Verbrauch. Die Steuereinrichtung vergleicht den mittels der Verbrauchsmeßeinrichtung erfaßten (akkumulierten) Wert der jeweiligen tatsächlich verbrauchten Menge des Mediums mit dem (absoluten akkumulierten) Wert der zugewiesenen und freizugebenden Verbrauchsmenge für die betreffende Verbrauchsstelle. Überschreitet nun der tatsächliche Medienverbrauch die zugewiesene Verbrauchsmenge, so sorgt die Steuereinrichtung dafür, daß die Sperreinrichtung die weitere Versorgung der Verbrauchsstelle mit dem Medium unterbricht. Der Kunde kann nun durch erneute Vorauszahlung bei dem Versorgungsunternehmen erreichen, daß er weiterhin mit dem Medium versorgt wird. Das Versorgungsunternehmen übersendet die entsprechende Wertnachricht vorzugsweise per Funk an die Verbrauchsstelle und die Sperreinrichtung gibt die Versorgung der Verbrauchsstelle wieder frei.

In den meisten Fällen wird die Sperreinrichtung überhaupt nicht aktiviert werden müssen, da durch jeweilige rechtzeitige Vorauszahlung stets ein Wertguthaben in bezug auf die betrachtete Verbrauchsstelle vorhanden ist, wobei jede Aktualisierung des Wertguthabens als neue Verbrauchsmengenzuweisungsinformation vorzugsweise per Funk zur Kontrolleinrichtung der Verbrauchsstelle übertragen wird.

Das System nach der Erfindung ermöglicht es, eine ggf. vorgeschriebene minimale Grundversorgung unabhängig von einer Vorauszahlung aufrechtzuerhalten. Beispielsweise kann per Informationssignal zu bestimmten Zeiten eine jeweilige Grundversorgungsmenge des Mediums an einer betreffenden Verbrauchsstelle freigegeben werden.

Der Funkempfänger kann wasserdicht und manipulationssicher in das Gehäuse der jeweiligen Steuereinrichtung integriert werden. Die Verbrauchsmeßeinrichtung, die Sperreinrichtung und die Steuereinrichtung können zu einer Einheit zusammengefaßt sein (Verbrauchskontrolleinrichtung als integriertes Prepayment-Endgerät). Bei einem solchen integrierten Prepayment-Endgerät kann z.B. dieselbe Anzeige den Zählerstand der Verbrauchsmeßeinrichtung und den noch verfügbaren Restwert, z.B. im Wechsel, anzeigen.

Die Wertzuweisung oder Verbrauchsmengenzuweisung ist an einen bestimmten Empfänger gebunden. Damit kann im Streit- oder Zweifelsfall über den durch Vorauszahlung erworbenen Anspruch auf Medienversorgung stets zählerbezogen das insgesamt für die betreffende Verbrauchsstelle freigegebene Verbrauchsquantum mit dem von der Verbrauchsmeßeinrichtung erfaßten Verbrauchswert verglichen und auf Konsistenz (Verbrauchswert muß stets kleiner als der Wert des freigegebenen Verbrauchsquantums sein) überprüft werden. Wird an der Verbrauchsstelle der verfügbare Restwert angezeigt, so läßt sich bei Wechsel der Verbrauchsmeßeinrichtung, d.h. des Verbrauchszählers, oder bei Wechsel des die Verbrauchsstelle nutzenden Kunden stets eine Wertsicherung des übertragenen Guthabens erreichen.

Das unidirektionale Datenkommunikationssystem des Verbrauchskontrollsystems nach der Erfindung muß nicht sehr hohen Ansprüchen genügen, da die jeweiligen Datenmengen und die Datenübertragungsraten bei der Informationsübertragung vom Sender zu den Verbrauchsstellen klein sind. Bei einer besonders bevorzugten Ausführungsform des Verbrauchskontrollsystems nach der Erfindung wird als Funk-Datenkommunikationssystem ein sog. Pager-System verwendet. Hierbei handelt es sich um ein einfaches, zentralistisches, unidirektionales Datenkommunikationssystem. Bisher werden Pager-Systeme allgemein dazu genutzt, um gezielt bestimmten Personen preisgünstig per Funk kurze Nachrichten in Form von Ziffern oder kurzen Texten zukommen zu lassen. Derzeit betriebene Pager-Systeme haben eine niedrige Datenrate (1200 Baud), eine geringe HF-Gesamtbandbreite, empfindliche (-120 dbm) und stromsparende Empfänger (Batteriebetriebszeit mit Knopfzellen meist ca. 1000 Stunden) mit einfachem LCD-Display. Bei solchen unidirektionalen Funk-Datenübertragungssystemen kann - wie beim Rundfunk - ein zentraler Leistungssender ein sehr großes Gebiet abdecken, so daß die Funkzellen-Infrastruktur im Gegensatz zur Infrastruktur bei der Funktelefon-Technologie sehr weitmaschig und preisgünstig realisiert werden kann. Hinzu kommt, daß bei solchen Pager-Systemen das Datenaufkommen wegen der niedrigen Datenrate und der kurzen Nachrichtenlänge im Mittel weniger als ein Tausendstel der Gesamtübertragungskapazität im Vergleich zur Funktelefon-Technologie erfordert, so daß eine einzige Funkstation nicht nur funk, sondern auch datentechnisch leicht 100 000 Pager versorgen kann. Gleichzeitig vereinfacht die ausschließlich zentrale Initiative-Möglichkeit und die Speicher- und Verzögerbarkeit der Datenübertragung die Steuerung der Belegung und die Nutzbarkeit des Funkkanals dieser Systeme erheblich. Da die Endgeräte keinen Sender enthalten, können sie klein und kostengünstig realisiert werden, wobei sie einen geringen Strombedarf haben. Die niedrige Empfangsdatenrate ermöglicht ferner einfache und empfindliche Empfänger. Zur Sicherung gegen Datenverlust bei der Funkübertragung werden Pager-Nachrichten normalerweise numeriert und mehrfach in wachsenden Zeitabständen übersandt. Der Pager-Empfänger kann dann bei Empfang einer Wiederholung dies erkennen und die Wiederholung einfach ignorieren. Jeder Empfänger erhält eine eindeutige Rufnummer. Als Beispiel für ein Pager-System in Deutschland kann das "SCALL"-Angebot der deutschen Telekom genannt werden. Bei dem "SCALL"-Angebot werden keine Grundgebühren fällig, sondern es wird nur für die Übermittlung einer Nachricht eine feste Gebühr verlangt.

Die vorstehend beschriebenen Vorteile der Pager-Systeme können bei dem Verbrauchskontrollsystem nach der Erfindung mit unidirektionaler Funkübertragung ausgenutzt werden.

Alternativ zu solchen konventionellen Pager-Diensten kommen auch andere Broadcast-artigen Datenübertragungssysteme in Frage, die die Übertragung einer Wertbotschaft und einer jeweiligen Empfängeradresse ermöglichen. Da nur eine relativ geringe Übertragungskapazität erforderlich ist, könnte die Funkübertragung der Wertbotschaften (Verbrauchsmengenzuweisungsinformationen) auch mittels konventioneller Hörfunksender - z.B. außerhalb des Hörbereichs, wie beim deutschen RDS (Radio-Daten-System) oder ggf. über konventionelle Fernsehsender in der Fernseh-Austast-Lücke, wie beim Videotext-System, erfolgen.

Aber auch andere für einen Versorgungsdienstleister zugängliche Sendefrequenzen könnten für den Aufbau eines eigenen zentralisierten Broadcast-Dienstes herangezogen werden. Bei der typischen Nachrichtenlänge einer Wertbotschaft mit eindeutiger Empfängeradresse und Verbrauchsmengenzuweisungsinformation oder Wertinformation von zusammen etwa 16 Nutzbytes und einer Gesamtlänge einschließlich Verschlüsselung und Sicherungs-Schicht von insgesamt z.B. 200 Bit ergibt sich bei einer Übertragungsrate von 1200 Baud eine Übertragungsdauer von nur 1/6 Sekunde. Wird die Botschaft aus Sicherheitsgründen jeweils in verschiedenen Zeitabständen z.B. insgesamt sechsmal übertragen, so können pro Stunde über einen einzigen Funkkanal im Mittel bis zu 3600 Verbrauchsstellen angesprochen werden, um die Medienversorgung jeweils freizugeben bzw. zeitlich zu verlängern. Bei im Mittel monatlicher Aktualisierung der Verbrauchsmengenzuweisung würde dann die kommunikationstechnische Kapazität nur eines Senders für diese Anwendung bis zu ca. 2,6 Mio. Verbrauchsstellen ausreichen.

Mit modernen Verschlüsselungstechniken, wie digitaler, zeitabhängiger Signatur, kann man erreichen, daß sich trotz des offenen und ungesicherten Standard-Kommunikationskanals zum Empfänger (Prepayment-Pager) an der Verbrauchsstelle ein unautorisierter Wertübertrag sicher ausschließen läßt. Falls in einer Ausführungsform der Betrieb des Systems nach der Erfindung so gestaltet sein sollte, daß die übertragenen Verbrauchsmengenzuweisungsdaten inkrementale Verbrauchsmengenzuweisungswerte entsprechend dem zuletzt eingezahlten Vorauszahlungsbetrag sind, so kann z.B. die Zeichenfolge des Wertcodes zeitabhängig verschlüsselt werden, so daß ein Auffangen der Wertübertragungsbotschaft und eine spätere Wiederholung (also eine Wertduplizierung) erkannt und verhindert werden kann. Außerdem kann die Zielnummer der Nachricht, also die Adresse, nochmals mitverschlüsselt werden, so daß auch eine "Umleitung" der Wertnachricht zu einer anderen Verbrauchsstelle erkannt würde. Aus Gesichtspunkten des Datenschutzes kann die Wertzuweisung bzw. Verbrauchsmengenzuweisung außerdem nicht nur kryptografisch signiert, sondern der übertragene Wert und die Verbrauchsstellenadresse, z.B. die Zählernummer des zugeordneten Verbrauchszählers, auch noch zusätzlich kryptografisch verschlüsselt werden.

Zum Betrieb des Verbrauchskontrollsystems nach der Erfindung können somit konventionelle Pager-Dienste genutzt werden. Es kommen aber auch alle anderen Broadcast-artigen Datenübertragungsverfahren für das Verbrauchskontrollsystem nach der Erfindung in Frage, die die Funkdatenübertragung von einem geeigneten zentralisierten Sender oder von einer Gruppe von Sendern zu den Verbrauchsstellen ermöglichen und die je übertragener Botschaft eine eindeutige Empfängeradresse mitübertragen können.

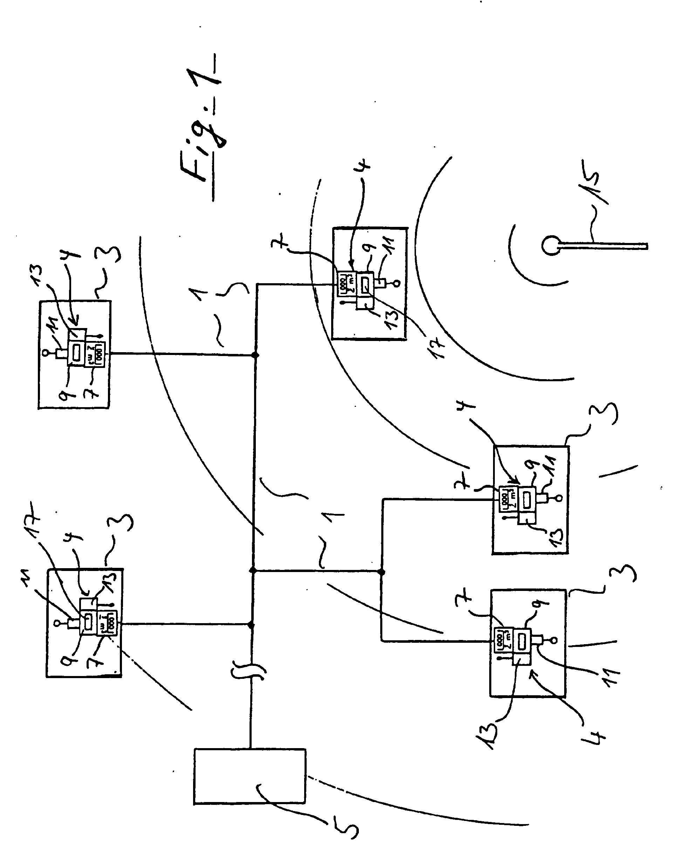

Ein Ausführungsbeispiel der Erfindung wird nachstehend unter Bezugnahme auf das Blockschaltbild gemäß Fig. 1 erläutert.

Fig. 1 zeigt in stark schematisierter Weise einen Teil eines Medienversorgungsnetzes, und zwar ein Leitungsnetz 1 für die Wasserversorgung einer Vielzahl von Verbrauchsstellen 3, die über das Leitungsnetz 1 mit einem Trinkwasser-Reservoir 5 eines betreffenden Waserversorgungsunternehmens verbunden sind.

Bei den Versorgungsstellen 3 kann es sich um Häuser, Wohnungen und dgl. handeln, für die jeweils gesondert eine Verbrauchserfassung erfolgt. Als Verbrauchsmeßeinrichtung ist an jeder Verbrauchsstelle ein Wasserzähler 7 installiert, der seinen Zählerstand entsprechend der an der betrachteten Verbrauchsstelle 3 dem Leitungsnetz 1 entnommenen Wassermenge erhöht, um den tatsächlichen Wasserverbrauch an der Verbrauchsstelle 3 zu erfassen. Der Wasserzähler 7 ist an einer elektronischen Steuereinrichtung 9 angeschlossen, die Zählerstandsdaten von dem Wasserzähler 7 erhält und den jeweiligen Zählerstandswert mit einem Verbrauchsmengenzuweisungswert vergleicht, um festzustellen, ob eine durch Vorauszahlung erworbene Wasserverbrauchsmenge erschöpft ist. Stellt die Steuereinrichtung 9 fest, daß der vom Wasserzähler 7 elektronisch bereitgestellte Wert des tatsächlichen Wasserverbrauchs den aktuellen Verbrauchsmengenzuweisungswert überschreitet, so läßt die Steuereinrichtung 9 eine Sperreinrichtung 11, nämlich ein von der Steuereinrichtung 9 gesteuertes Absperrventil 11, in den Sperrzustand übergehen, wodurch die Wasserversorgung der betreffenden Verbrauchsstelle 3 unterbrochen wird.

Die Steuereinrichtung 9 weist eine Verbrauchsinformationsanzeige 17 und einen Funkempfänger 13 auf. Der Funkempfänger 13 ist per Funksignal von einer Sendestation 15 aus adressierbar, um selektiv zu der Steuereinrichtung 9 der betreffenden Verbrauchsstelle 3 Verbrauchsmengenzuweisungsdaten mit dem Funksignal zu übertragen. Die Sendestation 15 und die Funkempfänger 13 der Verbrauchsstellen 3 sind Elemente eines sogenannten Pager-Systems, wobei es sich um ein einfaches, zentralistisches, unidirektionales Datenkommunikationssystem handelt. Das Pager-System kann in ein ohnehin vorhandenes Datenkommunikationssystem eines Pager-Dienstes integriert sein, so z.B. in Deutschland in das "SCALL"-System der Deutschen Telekom.

Die Elemente 7, 9, 11 und 13 in Fig. 1 stellen ein Ausführungsbeispiel einer Verbrauchskontrolleinrichtung 4 nach der Erfindung dar.

In bezug auf das in Fig. 1 grob skizzierte Verbrauchskontrollsystem ist es beispielsweise vorgesehen, daß für jede Verbrauchsstelle 3 ein-Konto bei dem Versorgungsunternehmen geführt wird. Sobald dem Konto einer jeweiligen Verbrauchsstelle 3 eine Einzahlung gutgeschrieben wird, wird von einer Abrechnungszentrale des Versorgungsunternehmens aus die Funkübertragung einer Wertbotschaft (Verbrauchsmengenzuweisungsinformation) von der Sendestation 5 zu der adressierten Verbrauchsstelle 3 ausgelöst. Die Steuereinrichtung 9 der betreffenden Verbrauchsstelle 3 aktualisiert daraufhin den Verbrauchsmengenzuweisungswert, mit dem der tatsächliche Verbrauch zu vergleichen ist. Sollte die Sperreinrichtung 11 vor Empfang der Verbrauchsmengenzuweisungsdaten in ihrem Sperrzustand gewesen sein, so sorgt die Steuereinrichtung 9 dafür, daß die Sperreinrichtung 1 wieder in den Durchlaßzustand übergeht und die Wasserversorgung für die betreffende Verbrauchsstelle 3 freigibt.

Wie bereits erwähnt, ist das Verbrauchsmengenkontrollsystem nach der Erfindung vorzugsweise so organisiert, daß von der Sendestation 15 zu den betreffenden Verbrauchsstellen 3 als Verbrauchsmengenzuweisungsinformation nicht das Inkrement entsprechend der aktuellen Vorauszahlung übertragen und von der Steuereinrichtung 9 berücksichtigt wird, sondern ein Wert, der in bezug auf den Verbrauchszähler 7 der betreffenden Verbrauchsstelle 3 den absoluten künftigen Zählerstandswert repräsentiert, bei dessen Erreichen die aktuell vorausbezahlte Verbrauchsmenge erschöpft ist. Eine solche Übertragung und Verarbeitung der absoluten Zählerstandsdaten anstelle von Verbrauchsmengenzuweisungsinkrementen hat den Vorteil, daß aus Sicherheitsgründen ohne Probleme Mehrfachübertragung der betreffenden Wertbotschaft von der Sendestation 15 zur betreffenden Verbrauchsstelle 3 erfolgen kann. Würde man nur die Verbrauchsmengenzuweisungsinkremente übertragen und in den betreffenden Steuereinrichtungen 9 jeweils aufaddieren, so wäre dafür Sorge zu tragen, daß bei Mehrfachübertragung keine Duplizierung bzw. Vervielfältigung der zugewiesenen Verbrauchsmenge vor Ort an der Verbrauchsstelle 3 erfolgt. Bei Übertragung der Zählerstandsdaten als Verbrauchsmengenzuweisungsdaten erfolgt in der Steuereinrichtung 9 vor Ort keine Summation der Verbrauchsmengenzuweisungsdaten, sondern eine Übernahme der aktuell übertragenen Daten für den Vergleich mit der tatsächlich verbrauchten Wassermenge.

Es sei darauf hingewiesen, daß bei dem System nach Fig. 1 die vor Ort einer jeweiligen Verbrauchsstelle 3 installierte Prepayment-Verbrauchskontrolleinrichtung 4 aus Verbrauchszähler 7, Steuereinrichtung 9, Sperreinrichtung 11 und Funkempfänger 13 als Geräteeinheit ausgebildet sein kann, die ihre elektrische Betriebsenergie aus einer Batterie bezieht.

Insbesondere in Abhängigkeit von den Gegebenheiten der jeweiligen Verbrauchsstellen 3 kann es auch sinnvoll sein, die Sperreinrichtung 11 einerseits und die Steuereinrichtung 9 andererseits konstruktiv voneinander zu trennen und nur durch drahtgebundene oder drahtlose lokale Kommunikationssysteme miteinander logisch zu verbinden. Auch hier reicht die einfachere unidirektionale Kommunikation, diesmal von der Steuereinrichtung 9 zur Sperreinrichtung 11, aus. Auch dieses Kommunikationssystem sollte durch geeignete kryptografische Verfahren gegen Verfälschung, Duplizierung, Replay und andere Manipulationstechniken gesichert werden. Außerdem sollte die Sperreinrichtung 11 in der Lage sein, die Medienversorgung an der zugeordneten Verbrauchsstelle 3 auch ohne Zufuhr von externer Hilfsenergie zu beenden, falls ungültige, insbesondere manipulationsverdächtige Signale von der Steuereinrichtung 9 zur Sperreinrichtung 11 übertragen werden.

Bei einer konstruktiven Trennung von Steuereinrichtung 9 einerseits und Verbrauchszähler 7 bzw. Sperreinrichtung 11 andererseits kann man auch z.B. die Summe mehrerer Verbrauchszähler (z.B. mehrere Zapfstellenzähler in einer Wohnung) und dementsprechend mehrere Sperreinrichtungen 11 einer gemeinsamen Steuereinrichtung 9 zuordnen. Bei konstruktiver Trennung der Elemente 7, 9, 11, 13 der Verbrauchskontrolleinrichtung 4 kann man einzelne Komponenten netzbetrieben realisieren, während andere batteriebetriebene Komponenten über Funk angekoppelt werden können. Es ist daher möglich, den Verbrauchszähler 7 und die Sperreinrichtung 11 an installationstechnisch günstigen Stellen des Waserleitungsnetzes an der Verbrauchsstelle 3 vorzusehen, wohingegen der Funkempfänger 13 an einer anderen, funktechnisch günstigeren Stelle plaziert ist.

Zur Einsparung von Strom bzw. zur Verlängerung der Batterielebensdauer ist im Rahmen der Erfindung allgemein vorgesehen, daß man die Funkempfänger nicht im Dauerbetrieb betreibt, sondern nur zeitweise einschaltet, z.B. eine Minute je Stunde oder eine Sekunde je Minute usw. Werden diese periodischen Einschaltpunkte nach bestimmten Regeln unter Einbeziehung der Sendeorganisation der Datensendezentrale 15 gewählt, so kann ein entsprechend abgestimmter Sendebetrieb realisiert werden, bei dem eine betreffende Verbrauchsstelle vom Sender 15 jeweils nur dann adressiert wird, wenn sie empfangsbereit ist. Eine Vereinfachung wäre dabei z.B., daß die jeweiligen Einschaltintervalle zeitlich entsprechend den letzten beiden Ziffern der funktechnischen Adresse gestaffelt werden. Dann kann die Abrechnungszentrale z.B. anstehende Wertübertragungs-Aufträge nach diesen letzten beiden Ziffern der Ziel-Adresse sortieren und die Wertübertragungsbotschaften jeweils nur in dem passenden Zeitschlitz senden. Dadurch wird trotz des Zeitschlitzbetriebs der Empfänger 13 die maximale Gesamt-Übertragungskapazität des Sendesystems nicht reduziert. Erforderlich ist dabei allerdings eine Synchronität der Uhren von Sender 15 und Empfänger 13. Da der Sender 15 aber neben den gezielten (adressierten) Wertübertragungsbotschaften auch zusätzlich z.B. regelmäßige allgemeine Botschaften ("an alle") aussenden kann, so könnte er mit solcher Broadcast-Kommunikation auch die Uhren aller Empfänger 13 regelmäßig synchronisieren.

Es sei noch darauf hingewiesen, daß gemäß einer Variante der Erfindung die Sperreinrichtung 11 einen Sicherungsmechanismus enthält, der die Sperreinrichtung 11 in den Sperrzustand übergehen läßt, falls die Verbrauchskontrolleinrichtung einen irregulären Betriebszustand, beispielsweise bei Kurzschluß, Leitungsbruch u. dgl., annimmt.

## Patentansprüche

1. System zur Kontrolle des Verbrauchs bzw. der Nutzung eines Mediums, wie z.B. elektrischer Strom, Gas, Wasser, Wärme oder dgl., an einzelnen Verbrauchsstellen (3),
wobei jeder Verbrauchsstelle (3) eine jeweilige Verbrauchsmenge des Mediums, insbesondere gegen Vorauszahlung oder ggf. auf Kredit zugewiesen werden kann, die vom Medienversorger für die betreffende Verbrauchsstelle bereitzustellen ist, wobei jede Verbrauchsstelle (3) mit einer Verbrauchskontrolleinrichtung (4) ausgestattet ist und jede Verbrauchskontrolleinrichtung (4) folgende Elemente umfaßt:
a) eine Verbrauchsmeßeinrichtung (7) zur Erfassung des tatsächlichen Medienverbrauchs an der betreffenden Verbrauchsstelle (3),
b) eine steuerbare Sperreinrichtung (11), mittels welcher die Medienversorgung in bezug auf die betreffende Verbrauchsstelle (3) unterbrochen werden kann, falls die zugewiesene Verbrauchsmenge durch den tatsächlichen Medienverbrauch erschöpft wird, und
c) eine die Sperreinrichtung (11) steuernde Steuereinrichtung (9), die den mittels der Verbrauchsmeßeinrichtung (7) erfaßten tatsächlichen Medienverbrauch mit der jeweiligen zugewiesenen Verbrauchsmenge vergleicht und die die Sperreinrichtung (11) zum Sperren der Medienversorgung der Verbrauchsstelle (3) aktiviert, falls die zugewiesene Verbrauchsmenge durch den tatsächlichen Medienverbrauch erschöpft wird,
d) einen als Teil der Steuereinrichtung (9) ausgebildeten Funkempfänger (13), der zum Empfang von Informationssignalen von einer Datensendezentrale (15) bestimmt und geeignet ist, die Informationen über jeweils zugewiesene Verbrauchsmengen enthalten, und
Bestandteil eines unidirektionalen Fünk-Datenkommunikationssystems ist, das Datenübertragung in Richtung von einer Datensendezentrale (15) zu den Funkempfängern (13) vorsieht, wobei jeder Empfänger (13) von der Datensendezentrale (15) aus mit einem jeweiligen Informationssignal eindeutig adressierbar ist, um Verbrauchsmengenzuweisungsdaten individuell in Zuordnung zur jeweiligen Verbrauchsstelle (3) übertragen zu können,
**dadurch gekennzeichnet, dass** jeder Empfänger (13) von seiner Steuereinrichtung (9) nur zu bestimmten, dem jeweiligen Empfänger zugeordneten Zeitpunkten, insbesondere periodisch, empfangsbereit geschaltet wird und daß die Datensendezentrale (15) nur zu den bestimmten Zeitpunkten mit dem betreffenden Empfänger (13) kommuniziert.

2. System nach Anspruch 1, **dadurch gekennzeichnet, daß** die mit dem Informationssignal übertragenen Verbrauchsmengenzuweisungsinformationen einen der betreffenden Verbrauchsstelle (3) zugeordneten absoluten Verbrauchsmengenzuweisungswert enthalten, der einem Zählerstandswert der Verbrauchsmeßeinrichtung entspricht oder proportional ist, bei dessen Erreichen die aktuell zugewiesene Verbrauchsmenge erschöpft ist, und wobei die Steuereinrichtung (9) dazu eingerichtet ist, den absoluten Verbrauchsmengenzuweisungswert oder ggf. einen dazu proportionalen Wert mit dem tatsächlichen Medienverbrauch an der Verbrauchsstelle (3) zu vergleichen.

3. System nach einem der vorhergehenden Ansprüche, **dadurch gekennzeichnet, daß** von der Sendestation (15) jeweils kryptografisch signierte Daten mit dem Informationssignal zu dem betreffenden Empfänger (13) übertragen werden, die von der betreffenden Steuereinrichtung (9) verarbeitbar sind.

4. System nach einem der vorhergehende Ansprüche, **dadurch gekennzeichnet, daß** von der Datensendezentrale (15) jeweils kryptografisch verschlüsselte Daten mit dem Informationssignal zu dem betreffenden Empfänger (13) übertragen werden, die von der betreffenden Steuereinrichtung (9) verarbeitbar sind.

5. System nach einem der vorhergehenden Ansprüche, **dadurch gekennzeichnet, daß** jede Steuereinrichtung (9) eine elektronische Zeituhr umfaßt und daß die Datensendezentrale (15) Synchronisationssignale zur gemeinsamen zeitlichen Synchronisation der Uhren der Steuereinrichtungen aller Verbrauchsstellen (3) aussenden kann.

6. System nach einem der vorhergehenden Ansprüche, **dadurch gekennzeichnet, daß** bei einer Verbrauchskontrolleinrichtung (4) die Verbrauchsmeßeinrichtung (7), die Sperreinrichtung (11) und die Steuereinrichtung (9) zu einer Geräteeinheit zusammengefaßt sind.

7. System nach Anspruch 6, **dadurch gekennzeichnet, daß** die Geräteeinheit ihren Betriebsstrom aus einer Batterie oder einem Akkumulator erhält.

8. System nach Anspruch 5, **dadurch gekennzeichnet, daß** die vorzugsweise batteriebetriebene Verbrauchsmeßeinrichtung gesondert von der Steuereinrichtung und der Sperreinrichtung angeordnet ist und mindestens unidirektional z.B. über Funk mit der Steuereinrichtung kommuniziert.

9. System nach Anspruch 5, **dadurch gekennzeichnet, daß** die Sperreinrichtung gesondert von der Verbrauchsmeßeinrichtung und der Steuereinrichtung angeordnet ist und daß die Steuereinrichtung mindestens unidirektional z.B. über Funk mit der Sperreinrichtung kommuniziert.

10. System nach einem der Ansprüche 5 - 9, **dadurch gekennzeichnet, daß** die Verbrauchskontrolleinrichtung wenigstens eine Anzeigevorrichtung (17) zur Anzeige von Verbrauchsmengenzuweisungsinformationen oder/und des tatsächlichen Medienverbrauchs oder/und eines Verbrauchsmengenrestguthabens aufweist.

11. System nach einem der Ansprüche 5 - 10, **dadurch gekennzeichnet, daß** die Sperreinrichtung (11) einen Sicherungsmechanismus enthält, der die Sperreinrichtung (11) in den Sperrzustand übergehen läßt, falls die Verbrauchskontrolleinrichtung einen irregulären Betriebszustand, beispielsweise bei Kurzschluß, Leitungsbruch u. dgl., annimmt.

## Claims

1. System for monitoring the consumption or use of a medium, such as electric power, gas, water, heat or the like, at individual points of consumption (3),
where each point of consumption (3) can be allocated a respective consumption quantity of the medium, in particular in return for payment in advance or possibly on credit, which consumption quantity is to be provided by the media supplier for the relevant point of consumption, each point of consumption (3) being equipped with a consumption monitoring device (4), and each consumption monitoring device (4) comprising the following elements:
a) a consumption measuring device (7) for recording the actual media consumption at the relevant point of consumption (3),
b) a controllable cutoff device (11) which can be used to interrupt the supply of media to the relevant point of consumption (3) if the allocated consumption quantity is used up by the actual media consumption, and
c) a control device (9) which controls the cutoff device (11), compares the actual media consumption recorded by means of the consumption measuring device (7) with the respective allocated consumption quantity and activates the cutoff device (11) to cut off the supply of media to the point of consumption (3) if the allocated consumption quantity is used up by the actual media consumption,
d) a radio receiver (13), designed as part of the control device, which is intended and suitable for receiving information signals from a data transmission centre (15), which information signals contain information about respectively allocated consumption quantities, and
is a component part of a unidirectional radio data communication system affording data transmission in the direction from a data transmission centre (15) to the radio receivers (13), where each receiver (13) can be uniquely addressed from the data transmission centre using a respective information signal, in order to be able to transmit consumption quantity allocation data individually for the respective point of consumption (3) **characterized in that** each receiver (13) is switched to reception standby by its control device (9) only at particular times allocated to the respective receiver, in particular cyclically, and **in that** the data transmission centre (15) communicates with the relevant receiver (13) only at the particular times.

2. System according to Claim 1, **characterized in that** the consumption quantity allocation information transmitted with the information signal contains an absolute consumption quantity allocation value which is associated with the relevant point of consumption (3) and is equivalent or proportional to a counter reading value on the consumption measuring device which, when reached, means that the currently allocated consumption quantity is used up, and where the control device (9) is set up to compare the absolute consumption quantity allocation value, or possibly a value proportional thereto, with the actual media consumption at the point of consumption (3).

3. System according to one of the preceding claims, **characterized in that** data which are in each case cryptographically signed are transmitted from the transmission station (15) to the relevant receiver (13) with the information signal and can be processed by the relevant control device (9).

4. System according to one of the preceding claims, **characterized in that** data which are in each case cryptographically encrypted are transmitted from the data transmission centre (15) to the relevant receiver (13) with the information signal and can be processed by the relevant control device (9).

5. System according to one of the preceding claims, **characterized in that** each control device (9) comprises an electronic timer and **in that** the data transmission centre (15) is able to transmit synchronization signals for synchronizing the timing of the clocks with one another to the control devices at all the points of consumption (3).

6. System according to one of the preceding claims, **characterized in that**, in a consumption monitoring device (4), the consumption measuring device (7), the cutoff device (11) and the control device (9) are combined to form an appliance unit.

7. System according to Claim 6, **characterized in that** the appliance unit obtains its operating current from a battery or a storage battery.

8. System according to Claim 5, **characterized in that** the preferably battery-operated consumption measuring device is arranged separately from the control device and the cutoff device and communicates with the control device at least unidirectionally, e.g. via radio.

9. System according to Claim 5, **characterized in that** the cutoff device is arranged separately from the consumption measuring device and the control device, and **in that** the control device communicates with the cutoff device at least unidirectionally, e.g. via radio.

10. System according to one of Claims 5-9, **characterized in that** the consumption monitoring device has at least one display apparatus (17) for displaying consumption quantity allocation information and/or the actual media consumption and/or a consumption quantity credit balance.

11. System according to one of Claims 5-10, **characterized in that** the cutoff device (11) contains a safety mechanism which puts the cutoff device (11) into the cutoff state if the consumption monitoring device adopts an irregular operating state, for example in the event of a short circuit, line breakage and the like.

## Revendications

1. Système de contrôle de la consommation ou de l'utilisation d'un produit, tel que le courant électrique, le gaz, l'eau, la chaleur ou similaire, en différents points de consommation (3),
sachant qu'à chaque point de consommation (3) peut être attribuée une quantité de consommation respective du produit, en particulier contre paiement préalable ou, le cas échéant, à crédit, laquelle doit être mise à disposition par le fournisseur du produit pour le point de consommation concerné, chaque point de consommation (3) étant équipé d'un dispositif de contrôle de la consommation (4) et chaque dispositif de contrôle de la consommation (4) comportant les éléments suivants :
a) un dispositif de mesure de la consommation (7) destiné à enregistrer la consommation réelle du produit au point de consommation (3) concerné,
b) un dispositif de blocage (11) apte à être commandé, au moyen duquel la fourniture du produit par rapport au point de consommation (3) concerné peut être interrompue si la quantité de consommation allouée est épuisée par la consommation réelle du produit, et
c) un dispositif de commande (9) qui commande le dispositif de blocage (11) et qui compare la consommation réelle du produit enregistrée par le dispositif de mesure de la consommation (7) avec la quantité de consommation allouée respectivement et qui active le dispositif de blocage (11) en vue de bloquer la fourniture du produit vers le point de consommation (3) au cas où la quantité de consommation allouée a été épuisée par la consommation réelle,
d) un récepteur radio (13), conçu sous la forme d'une partie du dispositif de commande (9), qui est destiné à recevoir des signaux d'information depuis une centrale d'émission de données (15) et qui est apte à contenir les informations sur les quantités de consommation allouées dans chaque cas, et
est une partie intégrante d'un système radio unidirectionnel de communication de données, qui prévoit la transmission de données dans la direction à partir d'une centrale d'émission de données (15) vers les récepteurs radio (13), chaque récepteur (13) pouvant être adressé sans équivoque avec un signal d'information correspondant à partir de la centrale d'émission de données (15), afin de pouvoir transmettre individuellement des données d'attribution de quantités de consommation en association avec le point de consommation (3) concerné,
**caractérisé en ce que** chaque récepteur (13) est activé pour la réception par son dispositif de commande (9) uniquement à des moments déterminés, associés à chaque récepteur, en particulier périodiquement, et **en ce que** la centrale d'émission de données (15) communique avec le récepteur (13) concerné uniquement à des moments déterminés.

2. Système selon la revendication 1, **caractérisé en ce que** les informations d'attribution de la quantité de consommation, transmises avec le signal d'information, contiennent une valeur absolue d'attribution de la quantité de consommation, qui est associée au point de consommation (3) concerné et qui est égale ou proportionnelle à la valeur du compteur du dispositif de mesure de la consommation, la quantité de consommation allouée actuellement étant épuisée lorsque cette valeur au compteur est atteinte, et le dispositif de commande (9) étant conçu pour comparer la valeur absolue d'attribution de la quantité de consommation ou, le cas échéant, une valeur proportionnelle à celle-ci, avec la consommation réelle du produit au niveau du point de consommation (3).

3. Système selon l'une quelconque des revendications précédentes, **caractérisé en ce que** des données à signature cryptographique, qui sont aptes à être traitées par le dispositif de commande (9) concerné, sont transmises avec le signal d'information depuis la centrale d'émission de données (15) vers le récepteur (13) concerné.

4. Système selon l'une quelconque des revendications précédentes, **caractérisé en ce que** des données codées chacune sous forme cryptographique, qui sont aptes à être traitées par le dispositif de commande (9) concerné, sont transmises avec le signal d'information depuis la centrale d'émission de données (15) vers le récepteur (13) concerné.

5. Système selon l'une quelconque des revendications précédentes, **caractérisé en ce que** chaque dispositif de commande (9) comporte une horloge électronique et **en ce que** la centrale d'émission de données (15) peut transmettre des signaux de synchronisation en vue d'une synchronisation temporelle simultanée des horloges des dispositifs de commande de tous les points de consommation (3).

6. Système selon l'une quelconque des revendications précédentes, **caractérisé en ce que** dans un dispositif de contrôle de consommation (4), le dispositif de mesure de la consommation (7), le dispositif de blocage (11) et le dispositif de commande (9) sont regroupés pour former une unité fonctionnelle.

7. Système selon la revendication 6, **caractérisé en ce que** l'unité fonctionnelle reçoit son courant d'alimentation d'une batterie ou d'un accumulateur.

8. Système selon la revendication 5, **caractérisé en ce que** le dispositif de mesure de la consommation, alimenté de préférence par batterie, est monté en étant séparé du dispositif de commande et du dispositif de blocage et communique, par radio par exemple, de manière unidirectionnelle avec le dispositif de commande.

9. Système selon la revendication 5, **caractérisé en ce que** le dispositif de blocage est monté en étant séparé du dispositif de mesure de la consommation et du dispositif de commande, et **en ce que** le dispositif de commande communique, par radio par exemple, de manière unidirectionnelle avec le dispositif de blocage.

10. Système selon l'une quelconque des revendications 5 à 9, **caractérisé en ce que** le dispositif de contrôle de la consommation comporte au moins un afficheur (17) pour afficher les informations d'attribution de la quantité de consommation et/ou la consommation réelle du produit et/ou un avoir restant sur la quantité de consommation.

11. Système selon l'une quelconque des revendications 5 à 10, **caractérisé en ce que** le dispositif de blocage (11) contient un mécanisme de sécurité, qui laisse le dispositif de blocage (11) passer à l'état de blocage au cas où le dispositif de contrôle de la consommation est amené dans un état de fonctionnement irrégulier, tel qu'un court-circuit, une rupture de ligne et similaire.
